# EUROPÄISCHE PATENTANMELDUNG

(11) **EP 4 098 690 A1**
(43) Veröffentlichungstag der Anmeldung: **07.12.2022**
(21) Anmeldenummer: 21177061.5
(22) Anmeldetag: 01.06.2021
(51) Int. Cl.: C08K 3/22, C08K 3/32, C08K 9/12, F21V 7/22

(54) **THERMOPLASTISCHE ZUSAMMENSETZUNG MIT HOHER WÄRMEFORMBESTÄNDIGKEIT UND REFLEXION**

(71) Anmelder: Covestro Deutschland AG, 51373 Leverkusen (DE)
(72) Erfinder: Wehrmann, Rolf, 47800 Krefeld (DE); Helmut-Werner Heuer, 57074 Siegen (DE); Anke Boumans, 47551 Bedburg-Hau (DE); Weimar, Peter, 51371 Leverkusen (DE)
(74) Vertreter: Levpat

(57) **Zusammenfassung**

Die vorliegende Erfindung betrifft thermoplastische Zusammensetzungen mit einer Vicat-Temperatur von mindestens 150 °C und maximal 240 °C, enthaltend ein Copolycarbonat, Titandioxid und mindestens eine geträgerte Brönsted-saure Verbindung in definierten Mengenverhältnissen. Ebenso betrifft die vorliegende Erfindung eine Formkörper, enthaltend die thermoplastische Zusammensetzung, ein Verfahren zur Herstellung der thermoplastischen Zusammensetzung und eine Verwendung einer geträgerten Brönsted-sauren Verbindung.

## Beschreibung

Die vorliegende Erfindung betrifft thermoplastische Zusammensetzungen mit einer Vicat-Temperatur von mindestens 150 °C und maximal 240 °C, enthaltend ein Copolycarbonat, Titandioxid und mindestens eine geträgerte Brönsted-saure Verbindung in definierten Mengenverhältnissen. Ebenso betrifft die vorliegende Erfindung einen Formkörper, enthaltend die thermoplastische Zusammensetzung, ein Verfahren zur Herstellung der thermoplastischen Zusammensetzung und eine Verwendung einer geträgerten Brönsted-sauren Verbindung.

Polycarbonatzusammensetzungen mit Titandioxid finden zunehmend als Material für Reflektoren von Leuchtkörpern, etwa von LED-Lampen oder LED-Arrays, insbesondere auch im Indoor- und Outdoor-Beleuchtungsbereich für Reflektoren sowie im Automotive-Bereich, etwa für Scheinwerferreflektoren Verwendung. Derartige Zusammensetzungen, die üblicherweise größere Mengen an Titandioxid enthalten, werden auch als "Reflective White"-Zusammensetzungen bezeichnet. Sie stellen eine neue Alternative zu metallisierten Reflektoren dar.

Zum einen erfordern solche neuartigen Reflektoren jedoch eine hohe Wärmeformbeständigkeit der Polycarbonatzusammensetzungen. Dies ist der Grund, warum insbesondere Polycarbonate mit einer hohen Glasübergangstemperatur (Tg) bzw. einer hohen Vicat-Temperatur für solche Zwecke eingesetzt werden. Nachteilig ist hieran, dass auch zur Verarbeitung im Spritzguss oder durch Extrusion dieser Polycarbonatzusammensetzungen, enthaltend Hoch-Tg-Copolycarbonate / Copolycarbonate mit hohen Vicat-Temperaturen hohe Temperaturen erforderlich sind (beispielsweise um entsprechende Reflektorformkörper herzustellen). Gleichzeitig ist es Aufgabe eines Reflektors einen möglichst hohen Anteil des einfallenden Lichtes auch wieder abzustrahlen, das heißt zu reflektieren. Dazu werden den Copolycarbonaten mit hoher Vicat-Temperatur in der Regel Weißpigmente wie beispielsweise Titandioxid hinzugefügt. Diese führen durch ihre chemische Natur zu einem hohen Reflexionsvermögen des resultierenden Formkörpers. Jedoch führt der Zusatz von beispielsweise Titandioxid zu den Copolycarbonaten mit hohen Vicat-Temperaturen unter den hohen Temperaturen der Verarbeitung in der Regel zu einer verringerten Schmelzestabilität. Dies liegt insbesondere daran, dass die Copolycarbonatketten degradiert werden, was häufig zu einer Erhöhung des Yellowness Index (YI) führt. Dadurch sinkt die Reflexion. Ebenso kann bei einer thermischer Belastung und Alterung solcher Formkörper eine Verschlechterung/Erhöhung des Yellowness Indexes (YI) und damit eine Vergilbung beobachtet werden.

Der Abbau von Polycarbonaten (mit niedrigerer Vicat-Temperatur) durch die Zugabe von Titandioxid ist im Stand der Technik bekannt. So beschreibt beispielsweise die WO2013/060687 A1, dass Polycarbonatzusammensetzungen, enthaltend ABS, durch die Zugabe eines anorganischen oder organischen Ad- bzw. Absorbers und mindestens einer Brönsted-sauren Verbindung zu einer verbesserten Verarbeitungsstabilität führt, welche an der Stabilität des Glanzgrades der resultierenden Oberfläche gemessen wird. Hier ist jedoch zu betonen, dass mit ABS schlagzähmodifizierte Polycarbonatzusammensetzungen in der Regel bei Temperaturen von etwa 240 °C bis 270 °C verarbeitet werden, da die Anwesenheit von ABS keine höheren Verarbeitungstemperaturen zulassen. Bei höheren Temperaturen wird auch das ABS degradiert, was zu Zersetzung und Depolymerisation führt. Ebenso weisen diese schlagzähmodifzierten Polycarbonatzusammensetzungen meist nur geringere Mengen an Titandioxid (in der Regel als Pigment) auf, so dass der hierdurch induzierte Polymerabbau zum einen durch die geringeren Temperaturen und zum anderen durch die geringere Menge an Titandioxid insgesamt geringer ausfällt. Letztendlich steht in diesem Dokument auch der Glanzgrad im Vordergrund, welches eine reine Oberflächeneigenschaft ist. Glanz wird auch als gerichtete Reflexion bezeichnet. Für die Eigenschaften eines Reflektors steht aber das Gesamtreflexionsvermögen, das heißt die Summe von gerichteter und aber auch diffuser Reflexion im Vordergrund, damit eine möglichst hohe Lichtausbeute, -streuung und somit Beleuchtung der entsprechenden Umgebung bei definiertem/niedrigem Stromverbrauch und somit verbesserter Energieeffizienz resultiert. Damit können von solchen schlagzähmodifizierten Polycarbonatzusammensetzungen (mit niedrigen Vicat-Temperaturen) keine Vorhersagen in Bezug auf Eigenschaften von Copolycarbonatzusammensetzungen mit hohen Vicat-Temperaturen und hohen Anteilen an Titandioxid getroffen werden.

Ausgehend von diesem Stand der Technik bestand die Aufgabe der vorliegenden Erfindung darin, mindestens einen Nachteil des Stands der Technik zu verbessern. Insbesondere bestand die Aufgabe der vorliegenden Erfindung darin, eine thermoplastische Zusammensetzung mit einer hohen Vicat-Temperatur, enthaltend Titandioxid bereitzustellen, welche eine hohe Schmelzestabilität aufweist. Dies bedeutet insbesondere, dass die Aufgabe der vorliegenden Erfindung darin bestand, den Polymerabbau einer thermoplastischen Zusammensetzung mit einer hohen Vicat-Temperatur, enthaltend Titandioxid, bei der Herstellung in der Produktion und bei der Verarbeitung beim Spritzgießer zu verringern bzw. weitestgehend zu unterdrücken. Ebenso bestand die Aufgabe darin, den Polymerabbau einer solchen thermoplastischen Zusammensetzung bei der Alterung zu verringern bzw. weitestgehend zu unterdrücken. Dies galt insbesondere für thermoplastische Zusammensetzungen enthaltend hohe Mengen an Titandioxid. Im erfindungsgemäßen Zusammenhang sind "hohe Vicat-Temperaturen" als Temperaturen von mindestens 150 °C bis maximal 240 °C, bevorzugt von 155°C bis 240°C , besonders bevorzugt von 158°C bis 230 °C zu verstehen. Ebenso sind erfindungsgemäße "hohe Mengen an Titandioxid" als Mengen im Bereich von 1 bis 20 Gew.-%, bevorzugt von 5 bis 18 Gew.-%, besonders bevorzugt von 8 bis 16 Gew.-% Titandioxid in Bezug auf eine Zusammensetzung, enthaltend die unten näher beschriebenen Komponenten (A), (C) und das Titandioxid als Komponente (B), zu verstehen.

Mindestens eine, bevorzugt alle der oben genannten Aufgaben wurden durch die vorliegende Erfindung gelöst. Überraschend wurde gefunden, dass durch die Zugabe mindestens einer Brönsted-sauren Verbindung, welche aufgezogen auf mindestens einem festen Trägermaterial vorliegt, in einer definierten Menge eine thermoplastische Zusammensetzung mit einer Vicat-Temperatur von mindestens 150 °C und maximal 240 °C, enthaltend ein Copolycarbonat und Titandioxid, resultiert, welche eine verbesserte Schmelzestabilität aufweist. Dabei wurde zum einen gefunden, dass ein Polymerabbau bei der Compoundierung der herzustellenden thermoplastischen Zusammensetzung selbst bei hohen Verarbeitungstemperaturen deutlich unterdrückt werden konnten. Zum anderen wurde aber auch gefunden, dass die resultierenden thermoplastischen Zusammensetzung bessere Stabilität bei thermischer Belastung und/oder Alterung , insbesondere in Bezug auf den Polymerabbau, aufweisen und/oder die Vergilbung verbessert wurde. Vollkommen überraschend wurde zudem beobachtet, dass die Verwendung mindestens einer Brönsted-sauren Verbindung, welche aufgezogen auf mindestens einem festen Trägermaterial vorliegt, in einer definierten Menge auch zu einer Verbesserung der optischen Eigenschaften der Zusammensetzung und auch des resultierenden Formkörpers führt. Dabei konnten insbesondere eine erhöhte diffuse Reflexion sowie eine erhöhte Gesamtreflexion beobachtet werden im Vergleich zu Zusammensetzung, welche nicht mindestens eine Brönsted-saure Verbindung, welche aufgezogen auf mindestens einem festen Trägermaterial vorliegt, in einer definierten Menge enthält. Ebenso konnten geringere YIs sowohl direkt nach Herstellung der thermoplastischen Zusammensetzung als auch nach thermischer Belastung und/oder Alterung beobachtet werden. Dies bedeutet, dass insgesamt eine geringere Vergilbungstendenz beobachtet wurde. Dabei bleiben die Vicat-Temperaturen der thermoplastischen Zusammensetzung jedoch nahezu unverändert hoch. Ebenso konnten vergleichbare mechanische Eigenschaften zu thermoplastischen Zusammensetzungen ohne mindestens eine Brönsted-saure Verbindung, welche aufgezogen auf mindestens einem festen Trägermaterial vorliegt, verzeichnet werden.

Erfindungsgemäß wird eine thermoplastische Zusammensetzung mit einer Vicat-Temperatur von mindestens 150 °C und maximal 240 °C bereitgestellt, welche
(A) 79,99 bis 98,99 Gew.-% mindestens eines Copolycarbonats,
(B) 1 bis 20 Gew.-% Titandioxid und
(C) 0,01 bis 0,1 Gew.-% mindestens eine Brönsted-saure Verbindung, welche aufgezogen auf mindestens einem festen Trägermaterial vorliegt, enthält,
wobei sich die Gew.-% auf die Summe der Komponenten (A) bis (C) beziehen.

Ebenso werden erfindungsgemäß Formteile aus solchen Zusammensetzungen, insbesondere Reflektoren bereitgestellt.

Insbesondere die überraschenden Effekte in Bezug auf die optischen Eigenschaften, insbesondere die diffuse Reflexion bzw. die Gesamtreflexion machen die erfindungsgemäßen thermoplastischen Zusammensetzungen besonders geeignet für Reflektoren von Leuchtkörpern.

Die erfindungsgemäße Zusammensetzung weist eine Vicat-Temperatur von mindestens 150 °C und maximal 240 °C auf. Die Vicat-Temperatur (VST/B50 bzw. B120) ist ein Maß für die Wärmeformbeständigkeit. Sie ist dem Fachmann bekannt. Insbesondere ist sie bestimmbar gemäß ISO 306 aus 2013 an Prüfkörpern der Abmessung 80 x 10 x 4 mm mit einer Stempellast von 50 N und einer Aufheizgeschwindigkeit von 50°C/h bzw. von 120 °C/h mit einem Gerät Coesfeld Eco 2920 der Firma Coesfeld Materialtest. Dabei weist die erfindungsgemäße thermoplastische Zusammensetzung diese Vicat-Temperatur auf (und nicht nur alleine die Komponente (A)). Es versteht sich für den Fachmann, dass sich die Vicat-Temperatur des Copolycarbonats (A) durch die Zugabe des Titandioxids (B) leicht verändern kann. Insbesondere kann sie sich durch die Compoundierung leicht verändern. Erfindungsgemäß wurde jedoch gefunden, dass durch die Zugabe der Komponente (C) die Veränderung der Vicat-Temperatur durch die Compoundierung gering ist. Bevorzugt bezieht sich die die angegebene Vicat-Temperatur auf die resultierende thermoplastische Zusammensetzung, d. h. nach Compoundierung. Als Compoundieren bezeichnet man in der Polymeraufbereitung die Herstellung einer fertigen Kunststoff-Formmasse, dem Compound, aus gegebenenfalls mehreren polymeren Rohstoffen unter gegebenenfalls Zugabe von Polymeradditiven wie beispielsweise die oben genannten Komponenten (B) und (C). Die Compoundierung erfolgt überwiegend in Knetern oder Extrudern und umfasst die Verfahrensoperationen Fördern, Aufschmelzen, Dispergieren, Mischen, Entgasen und Druckaufbau. Der Compound wird im Sinne der vorliegenden Erfindungauch als thermoplastische Zusammensetzung bezeichnet.

Im Rahmen der vorliegenden Erfindung beziehen sich die angegebenen Gew.-% der Komponenten A, B, C und ggf. D - soweit nicht explizit anders angegeben - jeweils auf das Gesamtgewicht der Zusammensetzung (zur Definition der Komponente D, siehe unten). Es versteht sich, dass sämtliche in einer erfindungsgemäßen Zusammensetzung enthaltenen Komponenten zusammen 100 Gew.-% ergeben. Die Zusammensetzung kann neben den Komponenten A, B, C weitere Komponenten, etwa weitere Additive in Form der Komponente D, enthalten. Diese Komponenten alle zusammen ergeben die 100 Gew.-%.

Ganz besonders bevorzugt enthalten die vorbeschriebenen Zusammensetzungen aber keine weiteren Komponenten, sondern die Mengen der Komponenten A, B, C und ggf. D, insbesondere in den beschriebenen bevorzugten Ausführungsformen, ergänzen sich zu 100 Gew.-%, d. h. die Zusammensetzungen bestehen aus den Komponenten A, B, C, ggf. D.

Es versteht sich, dass die eingesetzten Komponenten übliche Verunreinigungen, die beispielsweise aus ihren Herstellungsprozessen herrühren, enthalten können. Es ist bevorzugt, möglichst reine Komponenten einzusetzen. Es versteht sich weiterhin, dass diese Verunreinigungen auch bei einer geschlossenen Formulierung der Zusammensetzung enthalten sein können.

Die einzelnen Komponenten sind nachfolgend näher beschrieben. Bei Zahlenbereichsangaben versteht es sich, dass "bis" den jeweils genannten Grenzwert, einschließlich seines Rundungsbereiches, einschließt. Ebenso versteht sich, dass es sich bei den Komponenten auch um Mischungen verschiedener Vertreter der jeweiligen Spezies handeln kann, also z.B. eine Mischung unterschiedlicher Copolycarbonate oder eine Mischung unterschiedlicher geträgerter Brönsted-saurer Verbindungen gemäß Komponente (C).

### Komponente (A)

Die erfindungsgemäßen thermoplastischen Zusammensetzungen enthalten 79,99 bis 98,99 Gew.-%, bevorzugt 81,99 bis 94,99 Gew.-%, besonders bevorzugt 83,98 bis 91,98 Gew.-% mindestens eines Copolycarbonats. Dem Fachmann sind Copolycarbonate bekannt, welche als Hauptbestandteil der erfindungsgemäßen thermoplastischen Zusammensetzung die Vicat-Temperatur der resultierenden Zusammensetzung so beeinflussen, dass sie im Bereich von mindestens 150 °C bis maximal 240 °C liegt.

Es ist bevorzugt, dass das mindestens eine Copolycarbonat der Komponente (A) mindestens eine Einheit der Formel (1a), (1b), (1c), (1d) oder beliebige Mischungen der Formeln (1a), (1b), (1c) und (1d) enthält: 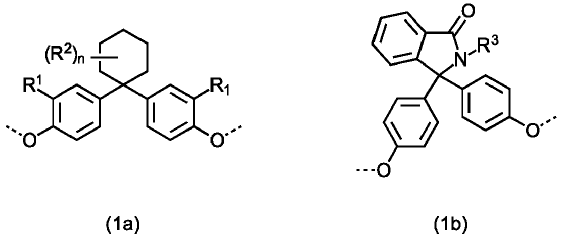 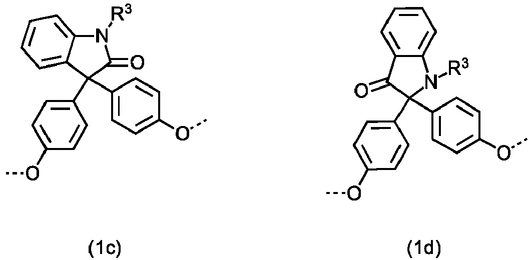 in denen
R¹ für Wasserstoff oder einen C₁- bis C₄-Alkylrest, bevorzugt für Wasserstoff, steht,
R² für einen C₁- bis C₄-Alkylrest, bevorzugt Methylrest, steht,
n für 0, 1, 2 oder 3, bevorzugt 3, steht und
R³ für einen C₁- bis C₄-Alkylrest, Aralkylrest oder Arylrest, bevorzugt für einen Methylrest oder Phenylrest, ganz besonders bevorzugt für einen Methylrest, steht.

Dabei steht C₁ bis C₄-Alkyl im Rahmen der Erfindung beispielsweise für Methyl, Ethyl, n-Propyl, iso-Propyl, n-Butyl, sec.-Butyl oder tert.-Butyl. Aryl steht bevorzugt für einen carbocyclischen aromatischen Rest mit 6 bis 34 Gerüstkohlenstoffatomen. Gleiches gilt für den aromatischen Teil eines Arylalkylrestes, auch Aralkylrest genannt. Arylalkyl bzw. Aralkyl bedeutet jeweils unabhängig einen geradkettigen, cyclischen, verzweigten oder unverzweigten Alkyl-Rest mit bis zu 6 Kohlenstoffatomen, der einfach, mehrfach oder vollständig durch Aryl-Reste gemäß vorstehender Definition substituiert sein kann.

Die Formeln (1a) bis (1d) umfassen alle aliphatische Gruppen. Daher weisen Copolycarbonate, welche mindestens ein Comonomer der Formel (1a) bis (1d) enthalten, in der Regel ein anderes Glanzverhalten auf als Polycarbonate auf Basis von Bisphenol A, welche im wesentlichen aromatische Gruppen aufweisen.

Bevorzugt umfasst das Copolycarbonat der Komponente (A) mindestens eine Einheit der Formel (la), in der R¹ für Wasserstoff oder einen C₁- bis C₄-Alkylrest, bevorzugt für Wasserstoff, steht, R² für einen C₁- bis C₄-Alkylrest, bevorzugt Methylrest, steht und n für 0, 1, 2 oder 3, bevorzugt 3, steht. Besonders bevorzugt umfasst das Copolycarbonat der Komponente (A) eine Einheit der Formel (la), in der R¹ für Wasserstoff steht, R² für Methyl steht und n für 3 steht. Eine solche Einheit (1a) ist abgeleitet von 1,1-Bis-(4-hydroxyphenyl)-3,3,5-trimethylcyclohexan (Bisphenol TMC). Die zur Herstellung der Copolycarbonate einzusetzenden Diphenole der Formeln (1a) und sind in der Literatur teilweise bekannt (DE 3918406).

Neben den Einheiten der Formel (1a), (1b), (1c), (1d) oder beliebige Mischungen der Formeln (1a), (1b), (1c) und (1d) sind im Copolycarbonat der Komponente (A) bevorzugt ein oder mehrere Monomereinheit(en) der Formel (4) enthalten: 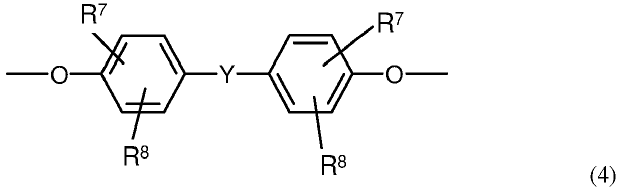 in der
R⁷ und R⁸ unabhängig voneinander für H, C₁-C₁₈-Alkyl-, C₁-C₁₈-Alkoxy, Halogen wie Cl oder Br oder für jeweils gegebenenfalls substituiertes Aryl oder Aralkyl, bevorzugt für H oder C₁-C₁₂-Alkyl, besonders bevorzugt für H oder C₁-C₈-Alkyl und ganz besonders bevorzugt für H oder Methyl stehen, und
Y für eine Einfachbindung, -SO₂-, -CO-, -O-, -S-, C₁-C₆-Alkylen oder C₂-C₅-Alkyliden, ferner für C₆-C₁₂-Arylen, welches gegebenenfalls mit weiteren Heteroatome enthaltenden aromatischen Ringen kondensiert sein kann, steht.

Die Monomereinheit(en) der allgemeinen Formel (4) führt man in das Copolycarbonat (A) über ein oder mehrere entsprechenden Diphenole der allgemeinen Formel (4a) auf dem Fachmann bekannte Weise ein: 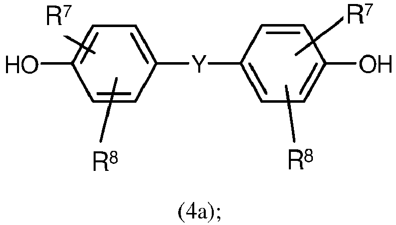 wobei R⁷, R⁸ und Y jeweils die bereits im Zusammenhang mit der Formel (4) erwähnte Bedeutung haben.

Beispielhaft werden für die Diphenole der Formel (4a), die neben den Diphenolen der Formel (1a) eingesetzt werden können, Hydrochinon, Resorcin, Dihydroxybiphenyle, Bis-(hydroxyphenyl)-alkane, Bis-(hydroxyphenyl)-sulfide, Bis-(hydroxy¬phenyl)-ether, Bis-(hydroxyphenyl)-ketone, Bis-(hydroxyphenyl)-sulfone, Bis-(hydroxy¬phenyl)-sulfoxide, alpha,alpha'-Bis-(hydroxyphenyl)-diisopropylbenzole, sowie deren kernalkylierte und kernhaloge-nierte Verbindungen und auch alpha,omega- Bis-(hydroxyphenyl)-polysiloxane genannt.
Ganz besonders bevorzugt sind Verbindungen der allgemeinen Formel (4b), 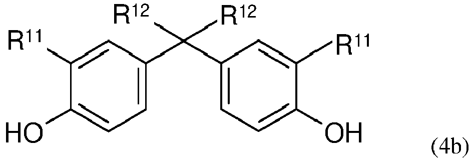 in denen R¹¹ für H, lineare oder verzweigte C₁-C₁₀ -Alkyl, bevorzugt lineare oder verzweigte C₁-C₆ -Alkyl, besonders bevorzugt für lineare oder verzweigte C₁-C₄-Alkyl, ganz besonders bevorzugt für H oder C₁-Alkyl (Methyl) steht und
in denen R¹² für lineare oder verzweigte C₁-C₁₀-Alkyl, bevorzugt lineare oder verzweigte C₁-C₆-Alkyl, besonders bevorzugt für lineare oder verzweigte C₁-C₄-Alkyl, ganz besonders bevorzugt für C₁-Alkyl (Methyl) steht.

Hierbei ist insbesondere das Diphenol (4c) ganz besonders bevorzugt.

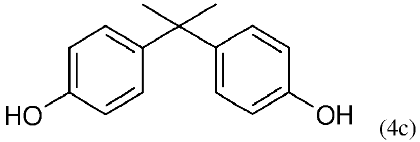

Die Diphenole der allgemeinen Formeln (4a) können sowohl allein als auch im Gemisch miteinander verwendet werden. Die Diphenole sind literaturbekannt oder nach literaturbekannten Verfahren herstellbar (siehe z.B. H. J. Buysch et al., Ullmann's Encyclopedia of Industrial Chemistry, VCH, New York 1991, 5. Ed., Vol. 19, p. 348).

Der Anteil der Monomereinheiten der Formeln (la), (1b), (1c), (1d) oder deren beliebige Mischungen im Copolycarbonat der Komponente (A) beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Diphenole).

Die bevorzugten Diphenolateinheiten der Copolycarbonate gemäß Komponente (A) leiten sich von Monomeren mit den allgemeinen Strukturen der oben beschriebenen Formeln (1a) und (4a) ab, besonders bevorzugt ist die Kombination aus den Bisphenolen (1a) und (4c).

Das Copolycarbonat der Komponente (A) kann als block- und statistisches Copolycarbonat vorliegen. Besonders bevorzugt sind statistische Copolycarbonate

Optional kann die Komponente (A) zusätzlich zum mindestens einen Copolycarbonat auch noch ein Homopolycarbonat umfassen. Dabei versteht es sich, dass das Copolycarbonat den Hauptteil der Komponente (A) ausmacht. Insoweit basiert die Komponente (A) auf mindestens einem Copolycarbonat.

Der Schmelzindex der Komponente (A) ermittelt nach ISO 1133:2012-03 liegt bevorzugt im Bereich von 5 cm³/10 min bis 90 cm³/10 min bei einer Temperatur von 330 °C und einer Last von 2,16 kg.

Es ist in der Polycarbonatchemie jedoch üblich, dass geringere Mengen Homopolycarbonat zur Einarbeitung der Additive, wie beispielsweise (B) und (C) in das Copolycarbonat verwendet werden. Bevorzugt umfasst die Komponente (A) daher 0 bis 20 Gew.-%, bevorzugt 1 bis 18 Gew.-% und besonders bevorzugt 3 bis 15 Gew.-% und ganz besonders bevorzugt 3 Gew.-% bis 10 Gew.-% eines Homopolycarbonats, wobei sich die Gew.-% auf die gesamte Komponente (A) bezieht (d. h. alle vorhandenen Copolycarbonate und alle vorhandenen Homopolycarbonate).

Bevorzugt weisen diese Homopolycarbonate ein oder mehrere Monomereinheit(en) der oben näher beschriebenen Formel (4) auf. Die Monomereinheit(en) der allgemeinen Formel (4) führt man in das optionale Homopolycarbonat der Komponente (A) über ein oder mehrere entsprechenden Diphenole der oben beschriebenen allgemeinen Formel (4a) auf dem Fachmann bekannte Weise ein. Ganz besonders bevorzugt sind Verbindungen der oben beschriebenen allgemeinen Formel (4b), insbesondere das oben beschriebene Diphenol (4c).

### Komponente (B)

Die erfindungsgemäßen thermoplastischen Zusammensetzungen enthalten 1 bis 20 Gew.-%, bevorzugt 5 bis 18 Gew.-%, besonders bevorzugt 8 bis 16 Gew.-% an Titandioxid.

Das Titandioxid gemäß Komponente (B) der erfindungsgemäßen thermoplastischen Zusammensetzungen weist bevorzugt eine mittlere Partikelgröße D₅₀, bestimmt mittels Rasterelektronenmikroskopie (STEM), von 0,1 bis 5 µm, bevorzugt 0,2 µm bis 0,5 µm, auf. Das Titandioxid kann aber auch eine andere Partikelgröße aufweisen, z.B. eine mittlere Partikelgröße D₅₀, bestimmt mittels Rasterelektronenmikroskopie (STEM), von ≥ 0,5 µm, etwa 0,65 bis 1,15 µm.

Das Titandioxid weist bevorzugt eine Rutilstruktur auf.

Das erfindungsgemäß eingesetzte Titandioxid ist ein Weißpigment, Ti(IV)O₂. Farbige Titandioxide enthalten neben Titan noch Elemente wie Sb, Ni, Cr in signifikanten Mengen, so dass sich ein anderer Farbeindruck als "weiß" ergibt. Es versteht sich, dass beim Weißpigment Titandioxid auch Spuren anderer Elemente als Verunreinigungen enthalten sein können. Diese Mengen sind jedoch so gering, dass das Titandioxid hierdurch keinen Farbstich bekommt.

Geeignete Titandioxide sind bevorzugt solche, welche nach dem Chlorid-Verfahren hergestellt, hydrophobiert, speziell nachbehandelt und für den Einsatz in Polycarbonat geeignet sind. Grundsätzlich kann in erfindungsgemäßen Zusammensetzungen statt beschlichtetem Titandioxid auch unbeschlichtetes Titandioxid oder eine Mischung aus beidem eingesetzt werden. Der Einsatz von beschlichtetem Titandioxid ist jedoch bevorzugt.

Zu möglichen Oberflächenmodifikationen von Titandioxid zählen anorganische und organische Modifikationen. Hierzu zählen z.B. Oberflächenmodifikationen auf Aluminium- oder Polysiloxanbasis. Eine anorganische Beschichtung kann 0,0 Gew.-% bis 5,0 Gew.-% Siliciumdioxid und/oder Aluminiumoxid enthalten. Eine Modifikation auf organischer Basis kann 0,0 Gew.-% bis 3,0 Gew.-% eines hydrophoben Benetzungsmittels enthalten. Das Titandioxid hat bevorzugt eine Ölabsorptionszahl, bestimmt nach DIN EN ISO 787-5:1995-10, von 12 bis 18 g/100 g Titandioxid, weiter bevorzugt von 13 bis 17 g/ 100 g Titandioxid, besonders bevorzugt von 13,5 bis 15,5 g/100 g Titandioxid.

Besonders bevorzugt ist Titandioxid mit der Normbezeichnung R2 gemäß DIN EN ISO 591-1:2001-08, welches mit Aluminium- und/oder Siliciumverbindungen stabilisiert ist und einen Titandioxid-Gehalt von mindestens 96,0 Gew.-% aufweist. Derartige Titandioxide sind unter den Markennamen Kronos 2233 und Kronos 2230 erhältlich.

### Komponente (C)

Die erfindungsgemäßen thermoplastischen Zusammensetzungen enthalten 0,01 bis 0,1 Gew.-%, bevorzugt 0,02 bis 0,08 Gew.-% mindestens einer Brönsted-sauren Verbindung, welche aufgezogen auf mindestens einem festen Trägermaterial vorliegt. Wenn zu wenig der Komponente (C) vorliegt, so wird der erfindungsgemäße Effekt, insbesondere die Verringerung des Polymerabbaus und die Verbesserung der optischen Eigenschaften nicht beobachtet. Liegt mehr als 0,1 Gew.-% der Komponente (C) vor, so liegt der erfindungsgemäße Effekt ebenfalls nicht mehr vor (siehe Vergleichsbeispiel 5). Hier ist ein vermehrter Polymerabbau zu beobachten sowie eine Verschlechterung des YIs.

Als festes Trägermaterial kann dabei erfindungsgemäß mindestens ein adsorptionsfähiges oder absorptionsfähiges anorganisches oder organisches Material zum Einsatz kommen. Bevorzugt handelt es sich dem festen Trägermaterial um ein feinteiliges und/oder poröses Material mit großer äußerer und/oder interner Oberfläche.

Dabei ist es bevorzugt, dass der mindestens eine feste Träger der Komponente (C), auf den die mindestens eine Brönsted-saure Verbindung aufgezogen ist, ein anorganisches Material enthält. Dabei ist es erfindungsgemäß auch vorgesehen, dass der feste Träger auch Titandioxid umfasst. Damit kann der Träger der Komponente (C) zumindest einen Teil der Komponente (B) der erfindungsgemäßen thermoplastischen Zusammensetzung ausmachen.

Bevorzugt handelt es sich bei dem festen Trägermaterial um ein thermisch inertes anorganische Material wie beispielsweise ein Oxid oder Mischoxid, ein Silikat, ein Sulfid, ein Nitrid von Metallen beziehungsweise Übergangsmetallen.

In einer bevorzugten Ausführungsform handelt es sich bei dem festen Trägermaterial um eine feinteilige und/oder mikroporöse Kieselsäure beziehungsweise ein Siliziumoxid oder Silikat natürlichen oder synthetischen Ursprungs. Als feinteiliges Siliziumoxid natürlichen Ursprungs kommt erfindungsgemäß beispielsweise Kieselgur in Frage. Dabei handelt es sich um eine weißliche, pulverförmige Substanz, die hauptsächlich aus den Siliziumdioxidschalen fossiler Kieselalgen (Diatomeen) besteht. Die Schalen bestehen zum größten Teil aus amorphen (nicht kristallinem) Siliziumdioxid (SiO₂) und weisen eine stark poröse Struktur auf.

Als festes Trägermaterial synthetischen Ursprungs wird in einer bevorzugten Ausführungsform Fällungskieselsäure und ein Silikat sowie pyrogene Kieselsäure verwendet. Synthetisch hergestellte Fällungskieselsäuren (Kieselgele) und Silikate sind feinteilige, lockere, weiße Pulver, die für spezielle Anwendungen auch in Granulatform erhältlich sind. Ihre Teilchen sind amorph. Chemisch bestehen diese Kieselsäuren und Silikate bis zu etwa 99 Prozent aus Siliziumdioxid (SiO₂).

Ausgangsmaterial für die Gewinnung von Kieselsäure auf nassem Wege sind Alkalisilikatlösungen, vorzugsweise Natronwasserglas, aus denen durch Zusatz von Säure amorphe Kieselsäure ausgefällt wird. Nach dem Filtrieren, Waschen und Trocknen besteht das gefällte Produkt zu 86-88% aus SiO₂ und zu 10-12% aus Wasser, das sowohl im Molekülverband als auch an der Oberfläche physikalisch gebunden ist.

Metallsilikate wie Calciumsilikat und Aluminiumsilikat erhält man, indem man die bei der Fällung verwendete Säure ganz oder teilweise durch Metallsalze ersetzt, die mit Wasserglas schwer lösliche Niederschläge bilden.

Die ausgefällte Kieselsäuresuspension wird in Filterpressen überführt, in denen die bei der Fällung entstandenen Salze ausgewaschen werden und so viel Wasser wie möglich entfernt wird. Der Filterkuchen enthält noch erhebliche Wassermengen, die bei der anschließenden Trocknung verdampft werden. Die Trocknung erfolgt nach unterschiedlichen Verfahren, je nachdem, welche Eigenschaften für das Kieselsäureprodukt angestrebt werden. Häufig folgen noch Mahl-, Sicht- und/oder Granulationsschritte.

Ein alternatives Verfahren zur Herstellung als festes Trägermaterial geeigneter feinteiliger Siliziumoxide ist die Flammenhydrolyse von Siliziumtetrachlorid (SiCl₄) oder anderen flüchtigen Chlorsilanen in einer Wasserstoff-Sauerstoff-Flamme ("Aerosil-Verfahren"). Bei diesem Verfahren entstehen die sogenannte pyrogenen Kieselsäuren mit Primärpartikeldurchmessern von im Allgemeinen etwa 5-50 nm und mit spezifischen Oberflächen von im allgemeinen etwa 30-600 m²/g. Durch Variation der Konzentration der Reaktionspartner, der Flammentemperatur und der Verweilzeit der Kieselsäure im Verbrennungsraum können die Teilchengrößen, die Teilchengrößenverteilung, die spezifische Oberflächen und die Oberflächenbeschaffenheit der pyrogenen Kieselsäuren beeinflusst werden.

In der Flamme verschmelzen die Primärteilchen zu größeren Einheiten (Aggregaten) von 100 bis 1000 nm Durchmesser, welche beim Abkühlen wiederum flockige mesoporöse Tertiärstrukturen (Agglomerate) mit einem Durchmesser von etwa 1 bis 250 µm ausbilden.

In besonders bevorzugter Ausführungsform kommen als festes Trägermaterial Fällungskieselsäuren zum Einsatz. Diese können eine hydrophile Oberfläche aufweisen oder nach Oberflächenmodifikation mit organischen Molekülen hydrophobiert vorliegen.

Die in der bevorzugten Ausführungsform als festes Trägermaterial zum Einsatz kommenden Fällungskieselsäuren weisen bevorzugt eine spezifische BET-Oberfläche bestimmt durch Stickstoffadsorption gemäß ISO 5794-1 von 150 bis 600 m²/g, insbesondere von 300 bis 600 m2/g auf. Sie weisen darüber hinaus eine Ölabsorptionszahl gemessen per Absorption von Dibutylphthalat (DBP) gemäß DIN 53601 von bevorzugt 150 bis 500 g/100 g, insbesondere von 300-400 g/100 g auf. Die bevorzugt zum Einsatz kommenden hydrophilen Fällungskieselsäuren weisen weiter bevorzugt einen pH-Wert gemessen gemäß ISO 787-9 an einer 5 Gew.-%igen Suspension der Kieselsäure in Wasser im sauren Bereich (d.h. <7), insbesondere im Bereich 6 bis 7.

Bevorzugt umfasst die mindestens eine Brönstedt-saure Verbindung eine anorganische Säure, weiter bevorzugt eine phosphorsaure Verbindung, d.h. eine Verbindung mit mindestens einer POH-Funktionalität.

Beispiele solcher Verbindungen sind
- ortho-Phosphorsäure P(O)(OH)₃,
- phosphorige Säure HP(O)(OH)₂,
- hypophosphorige Säure H₂P(O)(OH),
- Organophosphorverbindungen der phosphorigen und hypophosphorigen Säure mit der allgemeinen Formel RP(O)(OH)₂, R(H)P(O)(OH) und R(R')P(O)(OH), wobei R und R' unabhängig voneinander für einen beliebigen gegebenenfalls substituierten Alkyl-, Aryl- oder Alkylaryl-Rest stehen, sowie zyklische oder lineare oligomere oder polymere Verbindungen, saure Salze sowie saure Teilester der zuvor genannten Verbindungen. Besonders bevorzugt sind R und R' unabhängig voneinander ausgewählt aus der Gruppe, die Methyl-, Ethyl-, Propyl-, Isopropyl-, Butyl-, Isobutyl-, und tert-Butyl-Reste umfasst.

In bevorzugter Ausführungsform handelt es sich um eine Brönstedt-saure Phosphorverbindung, in der der Phosphor die Oxidationsstufe +3 oder +5 besitzt. Besonders bevorzugt ist die Oxidationsstufe +5.

Als besonders bevorzugte Brönstedt-saure Phosphorverbindungen eignen sich beispielsweise ortho-Phosphorsäure, meta-Phosphorsäure, Oligo- und Polyphosphorsäuren, phosphorige Säure, Methylphosphonsäure CH₃P(O)(OH)₂, saure Salze der zuvor genannten Verbindungen mit ein- und/oder zweiwertigen Metallkationen wie beispielsweise NaH₂PO₄, Na₂HPO₄, KH₂PO₄, K₂HPO₄, Mg_{0,5}H₂PO₄, MgHPO₄, Ca_{0,5}H₂PO₄, CaHPO₄, Zn_{0,5}H₂PO₄, ZnHPO₄, NaH₂PO₃, KH₂PO₃, Mg_{0,5}H₂PO₃, Ca_{0,5}H₂PO₃, Zn_{0,5}H₂PO₃ sowie Teilester der zuvor genannten Verbindungen wie beispielsweise P(O)(OH)(OR)(OR'), P(O)(OH)₂(OR), HP(O)(OH)(OR) und CH₃P(O)(OH)(OR), wobei R, R' wie oben definiert sind.

In bevorzugter Ausführungsform handelt es sich bei der Brönstedt-sauren Phosphorverbindung um ortho-Phosphorsäure oder phosphorige Säure, in besonders bevorzugter Ausführungsform um ortho-Phosphorsäure.

Es hat sich erfindungsgemäß herausgestellt, dass die Anwesenheit der Komponente (C) bei der Compoundierung, der Herstellung eines Formkörpers und/oder auch der Alterung des Formkörpers dazu führt, dass der Polymerabbau verringert wird im Vergleich zu einer Zusammensetzung, welche nur die Komponenten (A) und (B) enthält. Ebenso wurde gefunden, dass der Polymerabbau und/oder die Vergilbung verringert werden im Vergleich zu einer Zusammensetzung, welche die Komponenten (A) und (B) und eine andere Säure, welche keine geträgerte Brönsted-saure Verbindung ist, enthält. Zudem wurde gefunden, dass die Anwesenheit der Komponente (C) auch zu einer Verbesserung der optischen Eigenschaften der Zusammensetzung und auch des resultierenden Formkörpers führt. Dabei konnte insbesondere eine erhöhte diffuse Reflexion sowie eine erhöhte Gesamtreflexion beobachtet werden. Ebenso konnten geringere YIs sowohl direkt nach Herstellung der thermoplastischen Zusammensetzung als auch nach thermischem Stress und/oder Alterung beobachtet werden. Dies bedeutet, dass insgesamt eine geringere Vergilbungstendenz beobachtet wurde.

### Optionale Komponente (D)

Erfindungsgemäß ist es bevorzugt, dass die thermoplastische Zusammensetzung (D) ein oder mehrere weitere Additive umfasst.

Das eine oder die mehreren weiteren Additive (D) stellen übliche Additive dar. Sind optional (0 Gew.-%) bis zu 20 Gew.-%, weiter bevorzugt bis zu 10 Gew.-%, noch weiter bevorzugt 0,1 Gew.-% bis 6,0 Gew.-%, besonders bevorzugt 0,1 Gew.-% bis 3,0 Gew.-%, ganz besonders bevorzugt 0,2 Gew.-% bis 1,0 Gew.-%, insbesondere bis 0,5 Gew.-% enthalten, wobei sich diese Gewichtsprozente auf das Gesamtgewicht der Zusammensetzung beziehen. Die Gruppe der weiteren Additive umfasst kein Titandioxid, da dieses bereits als Komponente (B) beschrieben ist. Die Gruppe der weiteren Additive umfasst auch keine Brönsted-saure Verbindung, welche aufgezogen auf mindestens einem festen Trägermaterial vorliegt, gemäß Komponente (C).

Solche weiteren Additive der Komponente (D), wie sie üblicherweise Polycarbonaten zugesetzt werden, sind insbesondere Thermostabilisatoren, Antioxidantien, Entformungsmittel, Flammschutzmittel, Antidrippingmittel, UV-Absorber, IR-Absorber, Antistatika, optische Aufheller, von Komponente (B) verschiedene Füllstoffe, Lichtstreumittel, Hydrolysestabilisatoren, Umesterungsstabilisatoren und/oder Additive zur Lasermarkierung, insbesondere in den für Polycarbonat-basierte Zusammensetzungen üblichen Mengen. Derartige Additive sind beispielsweise in EP 0 839 623 A1, WO 96/15102 A1, EP 0 500 496 A1 oder im "Plastics Additives Handbook", Hans Zweifel, 5th Edition 2000, Hanser Verlag, München beschrieben. Diese Additive können einzeln oder auch im Gemisch zugesetzt werden.

Es versteht sich ferner, dass die Additive je nach Anwendungsziel der Zusammensetzungen auszuwählen sind. Beispielsweise enthalten für Reflektoren bestimmte Reflective White Zusammensetzungen keine Farbstoffe und Pigmente außer ggf. weiteren Weißpigmenten.

Es versteht sich, dass nur solche Additive und nur in solchen Mengen zugesetzt werden dürfen, wenn sie sich nicht signifikant negativ auf den erfindungsgemäßen Effekt der verbesserten Reflexion auswirken. Erfindungsgemäße Zusammensetzungen, die für Reflective White Anwendungen vorgesehen sind, enthalten daher z.B. bevorzugt keinen Ruß.

Besonders bevorzugt enthaltene Additive sind Thermostabilisatoren. Als Thermostabilisatoren sind insbesondere Phosphor-basierte Stabilisatoren, ausgewählt aus der Gruppe der Phosphate, Phosphite, Phosphonite, Phosphine und deren Mischungen, geeignet. Es können auch Mischungen von verschiedenen Verbindungen aus einer dieser Untergruppen eingesetzt werden, z.B. zwei Phosphite. Als Thermostabilisatoren werden bevorzugt Phosphor-Verbindungen mit der Oxidationszahl +III, insbesondere Phosphine und/oder Phosphite, eingesetzt. Als Thermostabilisatoren eignen sich besonders bevorzugt Triphenylphosphin, Tris-(2,4-di-tert-butylphenyl)phosphit (Irgafos^{®} 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox^{®} 1076), Bis-(2,4-dicumylphenyl)-pentaerythritoldiphosphit (Doverphos^{®} S-9228), Bis-(2,6-di-tert-butyl-4-methylphenyl)-pentaerythritoldiphosphit (ADK STAB PEP-36). Sie werden allein oder im Gemisch, z. B. Irganox^{®} B900 (Gemisch aus Irgafos^{®} 168 und Irganox^{®} 1076 im Verhältnis 4:1) oder Doverphos^{®} S-9228 mit Irganox^{®} B900 bzw. Irganox^{®} 1076, eingesetzt. Die Thermostabilisatoren werden bevorzugt in Mengen bis zu 1,0 Gew.-%, weiter bevorzugt 0,003 Gew.-% bis 1,0 Gew.-%, noch weiter bevorzugt 0,005 Gew.-% bis 0,5 Gew.-%, besonders bevorzugt 0,01 Gew.-% bis 0,2 Gew.-%, eingesetzt.

Bevorzugte Additive sind auch spezielle UV-Absorber, die eine möglichst geringe Transmission unterhalb 400 nm und eine möglichst hohe Transmission oberhalb von 400 nm besitzen. Für den Einsatz in der erfindungsgemäßen Zusammensetzung besonders geeignete Ultraviolett-Absorber sind Benzotriazole, Triazine, Benzophenone und/oder arylierte Cyanoacrylate sowie Oxaldianilide. Besonders geeignete Ultraviolett-Absorber sind Hydroxy-Benzotriazole, wie 2-(3',5'-Bis-(1,1-dimethylbenzyl)-2'-hydroxy-phenyl)-benzotriazol (Tinuvin^{®} 234, BASF SE, Ludwigshafen), 2-(2'-Hydroxy-5'-(tert.-octyl)-phenyl)-benzotriazol (Tinuvin^{®} 329, BASF SE, Ludwigshafen), Bis-(3-(2H-benztriazolyl)-2-hydroxy-5-tert.-octyl)methan (Tinuvin^{®} 360, BASF SE, Ludwigshafen), 2-(4,6-Diphenyl-1,3,5-triazin-2-yl)-5-(hexyloxy)-phenol (Tinuvin^{®} 1577, BASF SE, Ludwigshafen), 2-(5chloro-2H-benzotriazol-2-yl)-6-(1,1-dimethylethyl)-4-methyl-phenol (Tinuvin^{®} 326, BASF SE, Ludwigshafen), sowie Benzophenone wie 2,4-Dihydroxybenzophenon (Chimasorb^{®} 22 , BASF SE, Ludwigshafen) und 2-Hydroxy-4-(octyloxy)-benzophenon (Chimassorb^{®} 81, BASF SE, Ludwigshafen), 2,2-Bis[[(2-cyano-1-oxo-3,3-diphenyl-2-propenyl)oxy]-methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin^{®} 1600, BASF SE, Ludwigshafen), Tetraethyl-2,2'-(1,4-phenylen-dimethyliden)-bismalonat (Hostavin B-Cap, Clariant AG) oder N-(2-Ethoxyphenyl)-N'-(2-ethylphenyl)-ethandiamid (Tinuvin^{®} 312, CAS-Nr. 23949-66-8, BASF SE, Ludwigshafen).

Sofern UV-Absorber enthalten sind, enthält die Zusammensetzung bevorzugt Ultraviolett-Absorber in einer Menge bis 0,8 Gew.-%, bevorzugt 0,05 Gew.-% bis 0,5 Gew.-%, weiter bevorzugt 0,08 Gew.-% bis 0,4 Gew.-%, ganz besonders bevorzugt 0,1 Gew.-% bis 0,35 Gew.-%, bezogen auf die Gesamtzusammensetzung.

Als Entformungsmittel kommen insbesondere Pentaerythritoltetrastearat (PETS) bzw. Glycerinmonostearat (GMS) in Frage.

Füllstoffe verschieden von Komponente (B) können ebenfalls zugesetzt werden, sofern sie nach Art und Menge das Eigenschaftsniveau der vorliegenden Erfindung nicht beeinträchtigen. Diese können z.B. partikel-, schuppenförmigen oder faserförmigen Charakter haben. Beispielhaft seien an dieser Stelle Kreide, Bariumsulfat, Silikate/Aluminosilikate wie z.B. Wollastonit, Glimmer/Tonschichtmineralien, Montmorillonit, insbesondere auch in einer durch Ionenaustausch modifizierten, organophilen Form, Kaolin, Zeolithe, Vermiculit, Glasfasern, , genannt. Es können auch Mischungen verschiedener anorganischer Materialien zum Einsatz kommen. Bei "Reflective White" Einstellungen ist der möglicherweise negative Einfluss dieser Füllstoffe auf die Reflexionseigenschaften besonders zu beachten, so dass diese Komponenten bei Reflective White Zusammensetzungen bevorzugt nicht enthalten sind.

### Thermoplastische Zusammensetzungen

Erfindungsgemäß werden thermoplastische Zusammensetzungen bereitgestellt. Dabei ist es bevorzugt, dass die thermoplastische Zusammensetzung erhalten wird durch Vermischen mindestens der Komponenten (A) bis (C) bei einer Verarbeitungstemperatur von 300 °C bis 350 °C bevorzugt 310 °C bis 340 °C und besonders bevorzugt 310 °C bis 330 °C.

Die erfindungsgemäßen thermoplastischen Zusammensetzungen enthaltend mindestens die Komponenten (A) bis (C) werden bei Temperaturen von 310 °C bis 370 °C, bevorzugt bei 310 °C bis 365 °C und besonders bevorzugt bei 320 °C bis 360 °C zu den gewünschten Formteilen, beispielweise durch Extrusion oder im Spritzguss, verarbeitet.

Es versteht sich, dass bei diesen Verarbeitungstemperaturen die Anwesenheit vieler anderer in Polycarbonatzusammensetzungen häufig enthaltener Additive, wie beispielsweise ABS oder Schlagzähmodifikatoren auf Acrylat oder Butadien Basis, bevorzugt ausgeschlossen ist. Diese Produkte zersetzen sich bei den hohen erforderlichen Temperaturen bei der Herstellung der thermoplastischen Zusammensetzungen enthaltend mindestens die Komponenten (A) bis (C) und im nachfolgenden Verarbeitungsschritt zum gewünschten Fertigteil. Dies führt zu starken Verfärbungen der thermoplastischen Zusammensetzung, Ausdampfungen und ggf. zu Entzündungen am Extruderausgang. Andernfalls würde keine thermoplastische Zusammensetzung erhalten werden, welche den optischen Anforderungen genügen würde. Die Verfärbungen haben einen starken negativen Einfluss auf die erzielbaren Reflexionswerte.

Erfindungsgemäß bevorzugte thermoplastische Zusammensetzungen enthalten
Komponente (A) zu 81,99 bis 94,99 Gew.-%, bevorzugt 83,98 bis 91,98 Gew.-%,
Komponente (B) zu 5 bis 18 Gew.-%, bevorzugt 8 bis 16 Gew.-%,
Komponente (C) zu 0,01 bis 0,1 Gew.-%, bevorzugt 0,02 bis 0,08 Gew.-% und optional Komponente (D) ein oder mehrere weitere Additive,
wobei sich die angegebenen Gew.-% auf die Summe der Komponenten (A) bis (C) beziehen.

Die Herstellung der erfindungsgemäßen thermoplastischen Zusammensetzungen, enthaltend die Komponenten (A) bis (C) und ggf. (D) erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen. Es können auch Vormischungen aus Granulaten oder Granulaten und Pulvern mit den Komponenten (B), (C), sowie ggf. (D) verwendet werden. Es können auch Vormischungen verwendet werden, die aus Lösungen der Mischungskomponenten in geeigneten Lösungsmitteln, wobei gegebenenfalls in Lösung homogenisiert wird und das Lösungsmittel anschließend entfernt wird, hergestellt worden sind. Insbesondere können die als Komponente (D) bezeichneten Additive der erfindungsgemäßen Zusammensetzungen durch bekannte Verfahren oder als Masterbatch in das Copolycarbonat eingebracht werden. Die Verwendung von Masterbatchen ist insbesondere zum Einbringen von Additiven und weiteren Bestandteilen bevorzugt, wobei insbesondere Masterbatche auf Basis des oben beschriebenen Homopolycarbonates verwendet werden.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Daher wird erfindungsgemäß auch ein Verfahren zur Herstellung der erfindungsgemäßen thermoplastischen Zusammensetzung in sämtlichen oben beschriebenen Bevorzugungen bereitgestellt, welches dadurch gekennzeichnet ist, dass mindestens die Komponenten (A) bis (C) miteinander vermischt werden.

Die erfindungsgemäßen Zusammensetzungen können auf üblichen Maschinen, beispielsweise auf Extrudern oder Spritzgussmaschinen, zu beliebigen Formkörpern, wie beispielsweise Folien, Platten, Profilen, Rohren oder Flaschen, in üblicher Weise verarbeitet werden. Erfindungsgemäß wird daher auch ein Formkörper, enthaltend die erfindungsgemäße Zusammensetzung in sämtlichen oben beschriebenen Bevorzugungen bereitgestellt. Die erfindungsgemäßen Zusammensetzungen sind zur Herstellung von Bauteilen im Beleuchtungssektor, wie etwa Reflektoren oder Teilen von Reflektoren von Lampen, insbesondere LED-Lampen oder LED-Arrays, im Automotive-Bereich, etwa für Blenden, Schalter, Scheinwerferreflektoren oder -rahmen, sowie zur Herstellung von Rahmen bzw. Rahmenteilen bzw. Gehäuse- oder Gehäuseteilen im EE (Elektro/Elektronik)- und IT-Bereich geeignet, auch im Indoor- und Outdoor-Beleuchtungsbereich sowie für Batteriegehäuse im Automobilbereich. Aufgrund der sehr guten Reflexionswerte werden die erfindungsgemäßen Zusammensetzungen bevorzugt zur Herstellung von Reflektoren für Beleuchtungseinheiten für In- und Outdoor-Anwendungen eingesetzt. Dabei ist es besonders bevorzugt, dass der Formkörper ein Reflektor einer Beleuchtungseinheit ist

Ebenso wird erfindungsgemäß eine Verwendung von (C) 0,01 bis 0,1 Gew.-% mindestens einer Brönsted-sauren Verbindung, welche aufgezogen auf mindestens einem festen Trägermaterial vorliegt, zur Verbesserung der optischen Eigenschaften einer thermoplastischen Zusammensetzung mit einer Vicat-Temperatur von mindestens 150 °C und maximal 240 °C bereitgestellt, wobei die thermoplastische Zusammensetzung
(A) 80 bis 98,99 Gew.-% mindestens eines Copolycarbonats und
(B) 1 bis 20 Gew.-% Titandioxid
enthält und wobei sich die Gew.-% auf die Summe der Komponenten (A) bis (C) beziehen. Wie bereits oben beschrieben, wurde erfindungsgemäß gefunden, dass die Anwesenheit von (C) in der Zusammensetzung von (A), (B) und ggf. auch (D) überraschenderweise zu einer Verbesserung der optischen Eigenschaften führt. Dabei ist es insbesondere bevorzugt, dass die Verbesserung optischen Eigenschaften zumindest die Verbesserung der diffusen Reflexion, bevorzugt zusätzlich des Yellowness Indexes umfasst.

Erfindungsgemäß wird die Verbesserung der diffusen Reflexion bevorzugt auf Basis der Norm ASTM E 1331-04 bestimmt. Dabei wird am Spektralphotometer die Option SCE (specular component excluded siehe §5 in der Norm) gewählt. Dabei bezieht sich die Verbesserung der Reflexion bevorzugt immer auf eine entsprechende Zusammensetzung ohne die Komponente (C).

Es wird erfindungsgemäß bevorzugt zudem auch eine Verbesserung des Yellowness-Index, bevorzugt bestimmt nach ASTM E 313-15 (Beobachter 10° / Lichtart: D65) an Musterplatten mit einer Schichtdicke von 2 mm, erzielt. Auch hier dient als Referenz eine entsprechende Zusammensetzung ohne Komponente (C).

Es wird erfindungsgemäß bevorzugt zudem auch eine Verbesserung des Yellowness-Index nach Alterung, bevorzugt bestimmt nach ASTM E 313-15 (Beobachter 10° / Lichtart: D65) an Musterplatten mit einer Schichtdicke von 2 mm, erzielt. Auch hier dient als Referenz eine entsprechende Zusammensetzung ohne Komponente (C). Unter einer Alterung wird bevorzugt die Lagerung der entsprechenden Probe in einem Umluftofen bei 150 °C über 1000 h verstanden. Die für die erfindungsgemäßen Zusammensetzungen vorstehend beschriebenen Ausführungsformen gelten - soweit anwendbar - auch für die erfindungsgemäße Verwendung.

### Beispiele

A-1 A-1 ist ein kommerziell erhältliches Copolycarbonat auf Basis von Bisphenol A und Bisphenol TMC mit einem MVR von 18 cm³/10 min (330°C/2,16 kg) und einer Erweichungstemperatur (VST/B 120) von 183°C
A-2 A-2 ist ein Polycarbonatpulver auf Basis von Bisphenol A mit einem MVR von 19 cm³/10 min (300°C/1,2 kg).). Es dient zur besseren Einarbeitung (Dosierung) der Zuschlagstoffe.
B Fabutit 289 der Firma Chemische Fabrik Budenheim KG, Budenheim, Deutschland; ortho-Phosphorsäure absorbiert auf Silica-Gel
C Titandioxid Kronos 2230 der Firma KRONOS TITAN GmbH, Leverkusen, Deutschland

### Prüfmethoden:

Die Bestimmung der Lösungsviskosität eta rel erfolgte nach ISO1628-4:1999 mit einem Ubbelohde- Viskosimeter. Dazu wurden die Granulate gelöst und die Füllstoffe durch Filtration abgetrennt. Das Filtrat wurde eingeengt und getrocknet. Der erhaltene Film wurde zur Messung der Lösungsviskosität verwendet

Die Bestimmung des Schmelze-Volumenfließrate (MVR) erfolgte nach ISO 1133-1: 2012-03 (bei einer Prüftemperatur von 300 °C, Masse 1,2 kg) mit dem Gerät Göttfert MI-ROBO 8998 der Firma Göttfert oder dem Gerät Zwick 4106 der Firma Zwick Roell.

Die Bestimmung der Scherviskosität (Schmelzeviskosität) erfolgte in Anlehnung an ISO 11443: 2014-04 mit dem Gerät Visco-Robo 45.00 der Fa. Göttfert.

Die Vicat-Erweichungstemperatur VST/B50 als Maß für die Wärmeformbeständigkeit wurde gemäß ISO 306 aus 2013 an Prüfkörpern der Abmessung 80 x 10 x 4 mm mit einer Stempellast von 50 N und einer Aufheizgeschwindigkeit von 50°C/h mit dem Gerät Coesfeld Eco 2920 der Firma Coesfeld Materialtest bestimmt.

Die Molekulargewichte Mw (Gewichtsmittel), Mn (Zahlenmittel) und Mv (Viskositätsmittel) der verwendeten Polycarbonate wurden mittels Größenausschlusschromatographie (Gelpermeationschromotographie GPC; in Anlehnung an DIN 55672-1:2007-08 unter Verwendung einer BPA-Polycarbonat-Kalibrierung) bestimmt. Die Kalibrierung erfolgte mit linearen Polycarbonaten bekannter Molmassenverteilung (z. B. von PSS Polymer Standards Service GmbH, Deutschland). Dabei wurde die Methode 2301-0257502-09D (aus dem Jahre 2009 in deutscher Sprache) der Currenta GmbH & Co. OHG, Leverkusen angewandt. Dichlormethan wurde als Elutionsmittel verwendet. Die Säulenkombination bestand aus vernetzten Styrol-Divinylbenzolharzen. Die GPC kann eine oder mehrere hintereinander geschaltete handelsübliche GPC-Säulen zur Größenausschluss-Chromatographie umfassen, die so ausgewählt sind, dass eine hinreichende Trennung der Molmassen von Polymeren, insbesondere von aromatischen Polycarbonaten mit gewichtsmittleren Molmassen M_{w} von 2.000 bis 100.000 g/mol möglich ist. Typischerweise haben die analytischen Säulen einen Durchmesser von 7,5 mm und eine Länge von 300 mm. Die Partikelgrößen des Säulenmaterials liegen im Bereich von 3 µm bis 20 µm.

Die Konzentration der untersuchten Lösungen betrug 0,2 Gew./%. Die Flussrate wurde auf 1,0 ml/min eingestellt, die Temperatur der Lösung betrug 30°C. Die Detektion erfolgte mit Hilfe eines Brechungsindex (RI) Detektors.

Der Zug-E-Modul wurde gemäß ISO 527 von 1993 an einseitig angespritzten Schulterstäben mit einem Kern der Dimension 80 x 10 x 4 mm gemessen

Der Streckspannung, Streckdehnung, Reißfestigkeit und Reißdehnung wurde gemäß ISO 527 von 1993 an einseitig angespritzten Schulterstäben mit einem Kern der Dimension 80 x 10 x 4 mm gemessen

### Bestimmung der optischen Eigenschaften:

Das totale Reflexionsspektrum wurde mit einem Spektralphotometer auf Basis der Norm ASTM E 1331-04 gemessen. Dabei wurde am Spektralphotometer die Option SCI (specular component inculded siehe §5 in der Norm) gewählt. Aus dem so erhaltenen Transmissions- oder Reflexionsspektrum wurden die visuelle Transmission Ty (nach Lichtart D65, Beobachter 10°) oder die visuelle Reflexion Ry (nach Lichtart D65, Beobachter 10°) jeweils nach ASTM E 308 -08 berechnet. Die gilt auch für die Farbwerte L*a*b*. Um das sogenannte diffuse Reflexionsspektrum zu messen wurde am Spektralphotometer die Option SCE (specular component excluded siehe §5 der Norm) gewählt.

Für die Messung des totale Transmissonsspektrums wird analog ASTM E 1348-15 verwendet.

Der Yellowness-Index (Y.I.) wurde nach ASTM E 313-10 (Beobachter: 10° / Lichtart: D65) bestimmt.

Die Bestimmung der Schmelze-Volumenfließrate (MVR) erfolgte nach ISO 1133:2012-03 (überwiegend bei einer Prüftemperatur von 330 °C, Masse 2,16 kg) mit dem Gerät Zwick 4106 der Firma Zwick Roell. Zusätzlich wurde der MVR-Wert nach 20 Minuten Vorwärmzeit gemessen (IMVR20'). Dies ist ein Maß für die Schmelzestabilität unter erhöhtem thermischen Stress.

Für die Alterung wurden die Proben in einem Umluftofen bei 150 °C über 1000 h gelagert und danach erneut vermessen.

**Tabelle 1**

| Rezeptur: | | **V1** | **2** | **3** | **4** | **V5** |
|---|---|---|---|---|---|---|
| A-1 | % | 80,0 | 80,0 | 80,0 | 80,0 | 80,0 |
| A-2 | % | 5,0 | 4,975 | 4,950 | 4,900 | 4,850 |
| B | % | | 0,025 | 0,050 | 0,100 | 0,15 |
| C | % | 15,0 | 15,0 | 15,0 | 15,0 | 15,0 |

| **Ergebnisse:** | | **1** | **2** | **3** | **4** | **V5** |
|---|---|---|---|---|---|---|
| MVR (330°C/2,16kg) 7min | cm³/10min | 24,5 | 22,7 | 20,5 | 20,2 | 29,8 |
| | | | | | | |
| Rel. Lsv Granulat | | 1,249 | 1,254 | 1,252 | 1,252 | 1,244 |
| | | | | | | |
| mittl. Molmasse, Mw (RI) | g/mol | 26590 | 26850 | 26930 | 26960 | 26390 |

| **Schervisk. (320°C)** | | | | | | |
|---|---|---|---|---|---|---|
| 50/s | | 506 | 636 | 677 | 701 | 319 |
| 100/s | | 504 | 602 | 639 | 673 | 311 |
| 200/s | | 478 | 552 | 591 | 620 | 303 |
| 500/s | | 409 | 454 | 484 | 503 | 268 |
| 1000/s | | 328 | 355 | 375 | 384 | 227 |
| 1500/s | | 273 | 289 | 306 | 312 | 199 |
| 5000/s | | 102 | 140 | 148 | 149 | 121 |

| **Schervisk. (330°C)** | | | | | | |
|---|---|---|---|---|---|---|
| 50/s | | 335 | 433 | 447 | 436 | 226 |
| 100/s | | 331 | 408 | 428 | 425 | 219 |
| 200/s | | 320 | 390 | 406 | 397 | 216 |
| 500/s | | 284 | 336 | 347 | 342 | 199 |
| 1000/s | | 238 | 276 | 283 | 280 | 175 |
| 1500/s | | 207 | 234 | 239 | 238 | 157 |
| 5000/s | | 95 | 119 | 121 | 121 | 101 |

| **Schervisk. (340°C)** | | | | | | |
|---|---|---|---|---|---|---|
| 50/s | | 229 | 288 | 303 | 293 | 166 |
| 100/s | | 222 | 280 | 296 | 284 | 163 |
| 200/s | | 219 | 274 | 285 | 274 | 157 |
| 500/s | | 200 | 246 | 253 | 245 | 149 |
| 1000/s | | 176 | 210 | 214 | 209 | 135 |
| 1500/s | | 157 | 184 | 187 | 184 | 123 |
| 5000/s | | 90 | 101 | 102 | 101 | 81 |
| | | | | | | |
| | °C | 181,3 | 181,4 | 181,7 | 182,1 | 176,8 |

| **Zugversuch** | | | | | | |
|---|---|---|---|---|---|---|
| Streckspannung | Mpa | 69 | 69 | 68 | 68 | 68 |
| Streckdehnung | % | 6,6 | 6,7 | 6,6 | 6,6 | 6,0 |
| Zugfestigkeit | Mpa | 69 | 69 | 68 | 68 | 68 |
| Reiß fes tigkei | Mpa | 56 | 52 | 52 | 51 | 55 |
| Reißdehnung | % | 12,8 | 30,6 | 43 | 29,1 | 11,4 |
| nom. Reißdehnung | % | 11,0 | 18 | 22 | 16 | 9,4 |
| E-Modul | Mpa | 2572 | 2620 | 2588 | 2593 | 2650 |

| **Optische Daten 330°C/1xVWZ Ausgangszusammensetzu ng** | | | | | | |
|---|---|---|---|---|---|---|
| Transmission (1mm) | % | 0,06 | 0,08 | 0,1 | 0,12 | 0,11 |
| Transmission (2mm) | % | 0,01 | 0,01 | 0,01 | 0,01 | 0,01 |
| YI (4mm) | | 4,06 | 3,74 | 3,71 | 3,64 | 4,12 |
| Reflexion (4mm) | % | 93,48 | 94,16 | 94,45 | 94,62 | 94,21 |

| **Optische Daten 340°C/2xVWZ Ausgangszusammensetzu ng** | | | | | | |
|---|---|---|---|---|---|---|
| YI (4mm) | | 4,04 | 3,84 | 3,82 | 3,65 | 4,24 |
| Reflexion (4mm) | | 93,42 | 94,02 | 94,26 | 94,48 | 94,04 |

| **Optische Daten 340°C/2-fach nach Alterung (1000h/150°C)** | | | | | | |
|---|---|---|---|---|---|---|
| YI (4mm) | | 11,52 | - | - | 10,61 | - |
| Reflexion (4mm) | % | 89,84 | - | - | 90,7 | - |

| **Optische Daten 330°C/1xVWZ -- Diffuse Reflexion** | | | | | | |
|---|---|---|---|---|---|---|
| YI (4mm) | | 4,97 | 4,0 | 4,0 | 3,9 | 4,24 |
| Reflexion (4mm) | % | 88,98 | 89,8 | 90,1 | 90,3 | 90,16 |

Wie aus der Tabelle 1 zu entnehmen ist, führt der Zusatz von Titandioxid zu einer Mischung aus einem Copolycarbonat und einem Homopolycarbonat zu einer Polymerabbau (siehe Rezeptur 1). Dies wird an am hohen MVR-Wert, dem niedrigeren eta-rel und den niedrigeren Molekulargewichten sichtbar. Fügt man die Komponente (C) in speziellen Mengen hinzu (Rezepturen 2 bis 4), so sind niedrigere MVR-Werte, höhere eta-rels und auch höhere Molekulargewichte messbar. Dies bedeutet, dass eine bessere Schmelzestabilität vorliegt und weniger Polymerabbau erfolgt ist. Diese geht einher mit einer etwas höheren Scherviskosität. Dabei bleiben die Vicat-Temperaturen und die mechanischen Daten nahezu unverändert. Es konnte zudem beobachtet werden, dass die optischen Eigenschaften der erfindungsgemäßen Zusammensetzungen sich verbessern. Die YI-Werte der Ausgangszusammensetzungen sowie der Zusammensetzungen nach Alterung sind verbessert im Verglich zu Rezeptur 1. Ebenfalls ist die Reflexion höher für die erfindungsgemäßen Zusammensetzungen, was insbesondere durch eine höhere diffuse Reflexion bedingt ist. Ist eine zu hohe Menge an Komponente (C) in der Zusammensetzung vorhanden (Rezeptur 5), so können diese Effekte nicht beobachtet werden. Es kommt insbesondere zu einem Polymerabbau.

| Rezeptur: | | **V6** | **V7** | **8** | **9** |
|---|---|---|---|---|---|
| A-1 | % | 80,0 | 80,0 | 80,0 | 80,0 |
| A-2 | % | 18,0 | 10,0 | 17,9 | 9,92 |
| B | % | | | 0,08 | 0,08 |
| C | % | 2,0 | 10,0 | 2,0 | 10,0 |
| | | | | | |
| | | | | | |

| **Ergebnisse:** | | **6** | **7** | **8** | **9** |
|---|---|---|---|---|---|
| MVR (330°C/2,16kg) 7min | cm³/10 m in | 25,9 | 36,3 | 24,3 | 30,4 |
| MVR (330°C/2,16kg) 20min | cm³/10 m in | 28,9 | 43,0 | 25,9 | 39,2 |
| | | | | | |
| Vicat B 120 | °C | 174, | 175, | 173, | 176, |

| **Optische Daten 330°C/1xVWZ Ausgangszusammensetzung** | | | | | |
|---|---|---|---|---|---|
| Transmission (1mm) | % | 5,82 | 0,22 | 5,73 | 0,29 |
| Transmission (2mm) | % | 1,47 | 0,01 | 1,37 | 0,01 |
| YI (4mm) | | 4,07 | 3,89 | 2,73 | 3,39 |
| Reflexion (4mm) | % | 88,5 | 92,7 | 88,0 | 93,1 |

| **Optische Daten 330°C / 1-fach nach Alterung (1000h/150°C)** | | | | | |
|---|---|---|---|---|---|
| YI (4mm) | | 19,0 | 14,1 | 18,3 | 13,8 |
| Reflexion (4mm) | % | 82,0 | 87,1 | 82,1 | 87,4 |

| **Optische Daten 330°C/1xVWZ -- Diffuse Reflexion** | | | | | |
|---|---|---|---|---|---|
| YI (4mm) | | 5,00 | 4,72 | 3,13 | 3,70 |
| Reflexion (4mm) | % | 83,5 | 88,0 | 83,2 | 88,7 |

Auch aus Tabelle 2 ist zu entnehmen, dass die Anwesenheit der Komponente (C) in der Zusammensetzung zu einer Stabilisierung der Schmelze unter Beibehaltung der Vicat-Temperatur und der mechanischen Eigenschaften führt. Gleichzeitig kann eine Verbesserung der optischen Eigenschaften gesehen werden. Der YI ist in den erfindungsgemäßen Beispielen 8 und 9 jeweils niedriger, die Reflexion jeweils höher als in den Vergleichsbeispielen V6 und V7.

## Patentansprüche

1. Thermoplastische Zusammensetzung mit einer Vicat-Temperatur von mindestens 150 °C und maximal 240 °C, enthaltend
(A) 79,99 bis 98,99 Gew.-% mindestens eines Copolycarbonats,
(B) 1 bis 20 Gew.-% Titandioxid und
(C) 0,01 bis 0,1 Gew.-% mindestens eine Brönsted-saure Verbindung, welche aufgezogen auf mindestens einem festen Trägermaterial vorliegt,
wobei sich die Gew.-% auf die Summe der Komponenten (A) bis (C) beziehen.

2. Thermoplastische Verbindung nach Anspruch 1, **dadurch gekennzeichnet, dass** der mindestens eine feste Träger der Komponente (C), auf den die mindestens eine Brönsted-saure Verbindung aufgezogen ist, ein anorganisches Material enthält.

3. Thermoplastische Zusammensetzung nach einem der Ansprüche 1 oder 2, **dadurch gekennzeichnet, dass** die mindestens eine Brönsted-saure Verbindung der Komponente (C) mindestens eine anorganische Säure enthält.

4. Thermoplastische Zusammensetzung nach Anspruch 3, **dadurch gekennzeichnet, dass** die mindestens eine Brönsted-saure Verbindung der Komponente (C) mindestens eine phosphorsaure Verbindung enthält.

5. Thermoplastische Zusammensetzung nach Anspruch 4, **dadurch gekennzeichnet, dass** die mindestens eine Brönsted-saure Verbindung der Komponente (C) ausgewählt wird aus der Gruppe, bestehend aus ortho-Phosporsäure und phosphoriger Säure.

6. Thermoplastische Zusammensetzung nach einem der Ansprüche 1 bis 5, **dadurch gekennzeichnet, dass** die thermoplastische Zusammensetzung
(D) ein oder mehrere weitere Additive umfasst.

7. Thermoplastische Zusammensetzung nach Anspruch 6, **dadurch gekennzeichnet, dass** das eine oder die mehreren Additive der Komponente (D) ausgewählt sind aus der Gruppe, bestehend aus Thermostabilisatoren, Antioxidantien, Entformungsmittel, Flammschutzmittel, Antidrippingmittel, UV-Absorber, IR-Absorber, Antistatika, optische Aufheller, von Komponente (B) verschiedene Füllstoffe, Lichtstreumittel, Hydrolysestabilisatoren, Umesterungsstabilisatoren und Additive zur Lasermarkierung.

8. Thermoplastische Zusammensetzung nach einem der Ansprüche 1 bis 7, **dadurch gekennzeichnet, dass** das mindestens eine Copolycarbonat der Komponente (A) mindestens eine Einheit der Formel (la), (1b), (1c), (1d) oder beliebige Mischungen der Formeln (1a), (1b), (1c) und (1d) enthält: 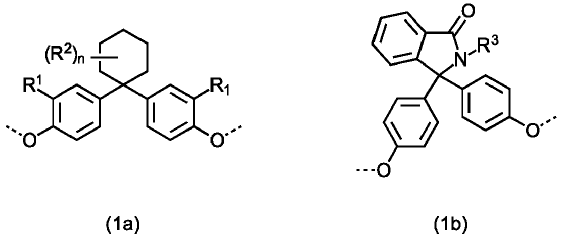 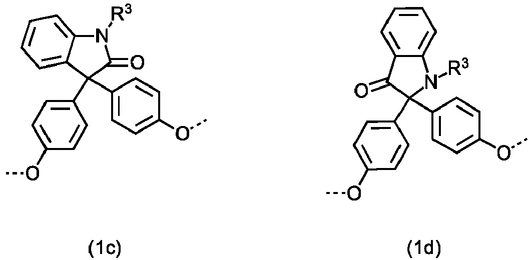 in denen
R¹ für Wasserstoff oder einen C₁- bis C₄-Alkylrest, bevorzugt für Wasserstoff, steht,
R² für einen C₁- bis C₄-Alkylrest, bevorzugt Methylrest, steht,
n für 0, 1, 2 oder 3, bevorzugt 3, steht und
R³ für einen C₁- bis C₄-Alkylrest, Aralkylrest oder Arylrest, bevorzugt für einen Methylrest oder Phenylrest, ganz besonders bevorzugt für einen Methylrest, steht.

9. Thermoplastische Zusammensetzung nach einem der Ansprüche 1 bis 8, **dadurch gekennzeichnet, dass** die thermoplastische Zusammensetzung erhalten wird durch Vermischen mindestens der Komponenten (A) bis (C) bei einer Verarbeitungstemperatur von 300 °C bis 350 °C.

10. Thermoplastische Zusammensetzung nach einem der Ansprüche 1 bis 9, **dadurch gekennzeichnet, dass** die thermoplastische Zusammensetzung enthält:
Komponente (A) zu 81,99 bis 94,99 Gew.-%,
Komponente (B) zu 5 bis 18 Gew.-%,
Komponente (C) zu 0,01 bis 0,1 Gew.-% und
optional Komponente (D) ein oder mehrere weitere Additive,
wobei sich die angegebenen Gew.-% auf die Summe der Komponenten (A) bis (C) beziehen.

11. Formkörper, enthaltend die thermoplastische Zusammensetzung nach einem der Ansprüche 1 bis 10.

12. Formkörper nach Anspruch 11, **dadurch gekennzeichnet, dass** der Formkörper ein Reflektor einer Beleuchtungseinheit ist.

13. Verfahren zur Herstellung der thermoplastischen Zusammensetzung nach einem der Ansprüche 1 bis 10, **dadurch gekennzeichnet, dass** mindestens die Komponenten (A) bis (C) miteinander vermischt werden.

14. Verwendung von (C) 0,01 bis 0,1 Gew.-% mindestens einer Brönsted-sauren Verbindung, welche aufgezogen auf mindestens einem festen Trägermaterial vorliegt, zur Verbesserung der optischen Eigenschaften einer thermoplastischen Zusammensetzung mit einer Vicat-Temperatur von mindestens 150 °C und maximal 240 °C, wobei die thermoplastische Zusammensetzung
(A) 80 bis 98,99 Gew.-% mindestens eines Copolycarbonats und
(B) 1 bis 20 Gew.-% Titandioxid
enthält und wobei sich die Gew.-% auf die Summe der Komponenten (A) bis (C) beziehen.

15. Verwendung nach Anspruch 14, **dadurch gekennzeichnet, dass** die Verbesserung optischen Eigenschaften zumindest die Verbesserung der diffusen Reflexion umfasst.
